Europäisches Patentamt

**European Patent Office** (11) Numéro de publication: **0 074 915**

Office européen des brevets **A1**

(12) **DEMANDE DE BREVET EUROPEEN**

(21) Numéro de dépôt: **82430022.2**

(22) Date de dépôt: **19.08.82**

(51) Int. Cl.³: **C 04 B 15/00**

(30) Priorité: **28.08.81 FR 8116611**

(43) Date de publication de la demande:
**23.03.83 Bulletin 83/12**

(84) Etats contractants désignés:
**AT BE CH DE GB IT LI LU NL**

(71) Demandeur: **Couturier, Jean**
**7, rue de l'Ermitage**
**F-78000 Versailles(FR)**

(72) Inventeur: **Couturier, Jean**
**7, rue de l'Ermitage**
**F-78000 Versailles(FR)**

(74) Mandataire: **Rinuy, Guy et al,**
**Cabinet Rinuy et Santarelli 14, Avenue de la Grande Armée**
**F-75017 Paris(FR)**

(54) Bétons perfectionnés convenant spécialement pour la construction des routes, des pistes et aires de circulation et de stationnement.

㉟ L'invention concerne des bétons perfectionnés convenant spécialement pour la construction de routes, pistes et aires de circulation et de stationnement tout en permettant d'obtenir de bonnes propriétés de résistances mécaniques et un bon état de surface sans fissuration, caractérisés par le fait que ce sont des bétons du type bétons secs compactés dont la composition comprend des charges granulaires de dimension comprise entre 0 et 25 mm, de préférence entre 0 et 14 mm, un liant hydraulique, une suspension ou une émulsion aqueuse d'au moins un polymère élastomérique en association ou non avec un produit mouillant tensio-actif et une teneur en eau totale inférieure à 8 %.

EP 0 074 915 A1

Croydon Printing Company Ltd.

1.

<u>Bétons perfectionnés convenant spécialement pour la construc-</u>
<u>tion des routes, des pistes et aires de circulation et de</u>
<u>stationnement</u>

La présente invention concerne des bétons perfectionnés convenant spécialement pour les chantiers routiers, les
pistes et aires de circulation et de stationnement.

Comme les bétons que l'on utilise dans le domaine du
bâtiment et la réalisation d'ouvrages d'art, les bétons dits
"routiers" usuels sont des bétons qui sont plastiques ; ils
sont mis en oeuvre au moyen de machines à coffrages glissants.
Or, les sujétions essentielles de ce type de bétons, en dehors
du matériel spécial, sophistiqué et coûteux auquel il faut avoir
recours, sont dues au séchage et à la nécessité qu'il y a de
scier des joints en vue de s'opposer aux ou pallier les phénomènes de fissuration résultant des retraits provoqués par la
prise du béton (retraits hydrauliques) ou par des influences
thermiques (retraits thermiques). Toutefois, de tels joints
réalisés sur des chaussées en béton constituent le grave inconvénient de ces dernières tant au point de vue du confort pour
la circulation des véhicules qu'au point de vue des problèmes
techniques qui leur sont liés tels que battement des dalles,
infiltration d'eau, bonne tenue des lèvres des joints, etc.

Pour éviter ces sujétions et inconvénients, on a
déjà proposé des bétons dits "bétons secs compactés" qui, outre
leur grande facilité de fabrication et de mise en oeuvre,
peuvent être appliqués pour la réalisation de routes en "rubans
continus" sans avoir besoin d'en constituer des dalles, d'où
l'avantage de ne pas avoir à prévoir des joints et de ne pas
rencontrer les difficultés qui sont liées à ces derniers.
Ces bétons sont en général à base de charges granulaires présentant des courbes de granulométrie discontinue ou continue
(0/10, 0/14 ou 0/20), d'un liant hydraulique (soit de la
classe des ciments, soit composé de laitiers broyés, cendres
volantes, pouzzolanes, prises séparément ou en mélanges, et
analogues, ayant un "pouvoir pouzzolanique") en présence ou
non d'activants ou de catalyseurs et une faible quantité
d'eau de l'ordre de 10 % en poids ou moins, cette faible quantité d'eau constituant une caractéristique particulière justifiant l'appellation de "bétons secs". Leur mise en oeuvre et leur compactage se font alors avec les matériels classiques destinés aux graves traitées et largement utilisés dans les travaux routiers.

Certaines formules de ces "bétons secs" ont déjà été présentées, parmi lesquelles on citera celles faisant l'objet du brevet français n° 78-22778 du 2 août 1978 et de son certificat d'addition n° 80-02549 du 6 février 1980. Ces formules comprennent, par exemple, une quantité de l'ordre de 10 % à 15 % de liant (constituée par un mélange de ciment et de cendres volantes et des charges calibrées) et une proportion d'eau totale inférieure à 10 %.

Lors de l'application de ces bétons dont les résistances mécaniques sont élevées et répondent aux "normes des chaussées en béton", il est apparu des points faibles dus à l'état de surface : ségrégation, dessication et fragilité des derniers millimètres superficiels.

Pour améliorer l'état de surface des "bétons secs compactés", on préconise généralement à ce jour un enduit au bitume avec gravillonnage ou bien la mise en oeuvre d'une couche d'enrobés à base d'un hydrocarbure lourd.

La présente invention se propose, par contre, de réaliser un béton sec compact présentant un bon état de surface sans avoir recours aux dérivés lourds du pétrole (brais, goudrons, asphaltes, bitumes et analogues).

Au surplus, l'invention se propose de fournir un tel béton présentant une meilleure résistance mécanique avec une tendance réduite à la fissuration.

Enfin, l'invention fournit un béton sec compacté présentant les avantages ci-dessus tout en ne nécessitant qu'une quantité réduite de liant sans nuire aux qualités et propriétés mécaniques. Les compositions de bétons secs compactés actuellement connues renferment en effet une quantité relativement importante de liant hydraulique.

Or, la présente invention permet de réduire de façon sensible cette quantité de liant, ce qui représente un avantage économique certain qui se passe de commentaires.

Ainsi, une composition de béton sec compacté selon l'invention est essentiellement caractérisée par le fait qu'elle comprend des charges granulaires de dimension comprise entre 0 et 25 mm, de préférence entre 0 et 14 mm, un liant hydraulique, une suspension ou une émulsion aqueuse d'au moins un polymère élastomérique en association ou non avec un produit mouillant tensio-actif et une teneur en eau totale inférieure à 8 %.

De façon avantageuse :

- le liant hydraulique peut comprendre un ou plusieurs liants hydrauliques ou pouzzolaniques connus, tels que ciment, cendres volantes de centrales thermiques, laitiers moulus avec ou sans activants ou catalyseurs ;
- la proportion de liant hydraulique est de l'ordre de 10 % ;
- la suspension ou émulsion est du type latex naturel ou synthétique et le polymère est choisi parmi les élastomères tels que ceux de styrène, de butadiène, de polyesters, de dérivés éthyléniques, de polyuréthanne, de polyisocyanates, de silicones, de composés acryliques, leurs dérivés de substitution et analogues ;
- le produit mouillant tensio-actif est avantageusement à base de lignosulfonate de métal alcalin ou alcalino-terreux ;
- la quantité de polymère (calculée en poids sec par rapport au granulat) est comprise entre 0,5 et 5 % et la quantité d'agent mouillant est comprise entre 0 et 1 % par rapport au liant hydraulique.

D'autres caractéristiques et avantages de l'invention ressortiront plus clairement de la description qui va suivre.

On a constaté en effet que si l'on réalisait un béton sec compacté répondant à la définition générale donnée ci-dessus, par exemple, correspondant à la formule

suivante :

100 % en poids ( - charges granulaires 88 % (87 à 92 %)
    sec       ( - liant hydraulique     12 % (8 à 13 %)
              (

                        - eau                         3 à 8 %
                          (y compris l'eau de la
                          suspension ou de
                          l'émulsion de polymère
                          et l'eau de l'agent
                          tensio-actif)

                        - additif liquide    ) lignosulfonate :
                          mis dans l'eau de  ) 0 à 1 % du poids
                          gâchage            ) du liant
                                             ) polymère, en sec :
                                             ) 25 à 50 % de
                                             ) l'additif liquide

on obtenait, d'une part, un bon état de la surface du béton
fini, et, d'autre part, la diminution voire la disparition
de la tendance à la fissuration. Par ailleurs, la présence
du produit de mouillage permet une meilleure liaison et
une meilleure adhésivité entre la pâte de liant et les
agrégats.

En outre, on obtient, avec des bétons conformes à l'invention, des résistances en traction directe de
l'ordre de 80 à 90 bars à 90 jours, soit une augmentation de
l'ordre de 15 à 30 % par rapport à un béton sec compacté du
type de ceux de l'art antérieur et en particulier de ceux
du brevet français et de son addition rappelés ci-dessus.
De toute façon, ces résistances sont nettement supérieures
aux normes de l'Administration des Ponts et Chaussées qui
correspondent à 55 bars pour les autoroutes et 45 bars pour
les routes normales.

De plus, la présence du polymère associé ou
non au produit de mouillage permet de diminuer de façon
sensible la teneur en liant hydraulique tout en conservant
au béton ses caractéristiques physiques, cette teneur pouvant descendre jusqu'à 8 %. Il en est de même pour la teneur en eau totale qui peut être aussi faible que 3 %.

En pratique, le ou les additifs liquides seront utilisés, soit par incorporation lors de la fabrication du béton (au malaxage), soit par imprégnation par pulvérisation des centimètres supérieurs de la couche de béton en cours ou à la fin du compactage.

L'intérêt et l'avantage de l'invention, ne serait-ce que du point de vue économique, apparaissent alors de façon évidente à l'homme de l'art qui dispose ainsi d'un matériau d'utilisation facile avec un appareillage classique lui permettant d'obtenir directement des chaussées en béton présentant non seulement des résistances supérieures à celles habituellement recherchées mais aussi directement un bon état de surface sans recourir à d'autres produits de finition ou d'enduits superficiels.

Il va du reste de soi que la présente invention n'a été décrite qu'à titre purement explicatif et nullement limitatif et que toutes modifications utiles pourront y être apportées sans sortir de son cadre.

6.

REVENDICATIONS

1. Bétons perfectionnés convenant spécialement pour la construction de routes, pistes et aires de circulation et de stationnement tout en permettant d'obtenir de bonnes propriétés de résistances mécaniques et un bon état de surface sans fissuration, caractérisés par le fait que ce sont des bétons du type bétons secs compactés dont la composition comprend des charges granulaires de dimension comprise entre 0 et 25 mm, de préférence entre 0 et 14 mm, un liant hydraulique, une suspension ou une émulsion aqueuse d'au moins un polymère élastomérique en association ou non avec un produit mouillant tensio-actif et une teneur en eau totale inférieure à 8 %.

2. Bétons selon la revendication 1, caractérisés en ce que la proportion de liant hydraulique est de l'ordre de 10 %.

3. Bétons selon la revendication 2, caractérisés en ce que la proportion de liant hydraulique est comprise entre 8 et 13 %.

4. Bétons selon l'une quelconque des revendications 1 à 3, caractérisés en ce que le liant hydraulique peut comprendre un ou plusieurs liants hydrauliques ou pouzzolaniques connus tels que ciment, cendres volantes de centrales thermiques, laitiers moulus avec ou sans activants ou catalyseurs.

5. Bétons selon l'une quelconque des revendications 1 à 4, caractérisés en ce que la suspension ou émulsion est du type latex naturel ou synthétique et le polymère est choisi parmi les élastomères tels que ceux de styrène, de butadiène, de polyesters, de dérivés éthyléniques, de polyuréthanne, de polyisocyanates, de silicones, de composés acryliques, leurs dérivés de substitution et analogues.

6. Bétons selon l'une quelconque des revendications 1 à 5, caractérisés en ce que le produit mouillant tensio-actif est avantageusement à base de lignosulfonate

7.

de métal alcalin ou alcalino-terreux.

7. Bétons selon l'une quelconque des revendications 1 à 6, caractérisés en ce que la quantité de polymère (calculée en poids sec par rapport au granulat) est comprise entre 0,5 et 5 % et la quantité de produit mouillant entre 0 et 1 % par rapport au liant hydraulique.

**0074915**

Numéro de la demande

**RAPPORT DE RECHERCHE EUROPEENNE**

Office européen
des brevets

EP 82 43 0022

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| | --- | | C 04 B 15/00 |
| X | US-A-4 240 952 (CLARENCE E.)<br><br>*Revendications 1,2,3; colonne 3, lignes 6-28* | 1,2,4, 5,7 | |
| | --- | | |
| Y | FR-A-2 142 282 (SOC. RHONE PROGIL)<br>*Revendications 1,2; page 4, lignes 1-7* | 1,3,4, 5 | |
| | --- | | |
| Y | FR-A-2 432 490 (COUTURIER JEAN)<br>*Revendications 1,3* | 1 | |
| | ----- | | |

**DOMAINES TECHNIQUES RECHERCHES (Int. Cl. 3)**

C 04 B

Le présent rapport de recherche a été établi pour toutes les revendications

| Lieu de la recherche<br>LA HAYE | Date d'achèvement de la recherche<br>07-11-1982 | Examinateur<br>STANGE R.L.H |
|---|---|---|